# EUROPEAN PATENT APPLICATION

(11) **EP 4 668 088 A1**
(43) Date of publication of application: **24.12.2025**
(21) Application number: 24775192.8
(22) Date of filing: 20.03.2024
(51) Int. Cl.: G06F 3/04845, G06F 3/04812

(54) **METHOD FOR DISPLAYING EDGE LIGHTING EFFECT AND ELECTRONIC DEVICE THEREFOR**

(30) Priority: 21.03.2023 KR 20230036423; 25.04.2023 KR 20230053750
(71) Applicant: Samsung Electronics Co., Ltd., Suwon-si, Gyeonggi-do 16677 (KR)
(72) Inventor: LIM, Eunsil, Suwon-si, Gyeonggi-do 16677 (KR); LEE, Heejae, Suwon-si, Gyeonggi-do 16677 (KR); NAM, Myoungwoo, Suwon-si, Gyeonggi-do 16677 (KR); LEE, Bona, Suwon-si, Gyeonggi-do 16677 (KR); LIM, Yeunwook, Suwon-si, Gyeonggi-do 16677 (KR)
(74) Representative: Nederlandsch Octrooibureau
(86) International application number: PCT/KR2024/003484
(87) International publication number: WO 2024/196145

(57) **Abstract**

Various embodiments of the present invention may comprise a display (160), a memory (130), and a processor (120). Instructions stored in the memory may be configured to, when executed by the processor, cause an electronic device (101) to: detect, on an execution screen of an application displayed on the display, a user input to interrupt display of the execution screen of the application; display information associated with the application on the display in response to the user input; and display a color corresponding to the application at a location in which the information associated with the application is displayed and on a handle-type user interface (UI). Various embodiments are possible.

## Description

### [Technical Field]

Various embodiments of the disclosure relate to a method for displaying an edge lighting effect and an electronic device therefor.

### [Background Art]

With the development of digital technology, various types of electronic devices such as mobile communication terminals, personal digital assistants (PDAs), electronic notebooks, smartphones, tablet personal computers (PCs), or wearable devices are being widely used. These electronic devices are continuously improving their hardware and/or software components to support and enhance their functions.

For example, electronic devices may provide a new form factor with a plurality of displays or provide a voice call service enabling users to execute desired functions with their voices instead of using a keypad. In addition, electronic devices may provide new user experiences to users by utilizing various areas of the display.

### [Disclosure of Invention]

### [Technical Problem]

In an embodiment, a method and device may be disclosed to execute an application, display information associated with the application when the display of the execution screen of the application is interrupted, provide an edge lighting effect to an edge of a display, based on a path from a specified position to an edge handler, and display a color corresponding to the application on the edge handler.

### [Solution to Problem]

An electronic device 101 according to an embodiment of the disclosure may include a display 160, a memory 130, and a processor 120, wherein instructions stored in the memory may be configured to cause, when executed by the processor, the electronic device to detect, on an execution screen of an application displayed on the display, a user input to interrupt display of the execution screen of the application, display information associated with the application on the display in response to the user input, and display a color corresponding to the application at a position where the information associated with the application is displayed and on a handle-type user interface (UI).

A method for operating an electronic device 101 according to an embodiment of the disclosure may include detecting, on an execution screen of an application displayed on a display 160 of the electronic device, a user input to interrupt display of the execution screen of the application, displaying information associated with the application on the display 160 in response to the user input, and displaying a color corresponding to the application at a position where the information associated with the application is displayed and on a handle-type UI.

A computer-readable recording medium may include a program recorded to execute a method for operating an electronic device 101 on a processor 120, wherein the program may be configured to execute an operation of detecting, on an execution screen of an application displayed on a display of the electronic device, a user input to interrupt display of the execution screen of the application, an operation of displaying information associated with the application on the display 160 in response to the user input, and an operation of displaying a color corresponding to the application at a position where the information associated with the application is displayed and on a handle-type UI.

### [Advantageous Effects of Invention]

According to an embodiment, in the case where the display of the execution screen of an application that needs to display a current state is interrupted after executing the application, a new type of user experience interface is able to be provided by displaying brief information of the application and providing an edge lighting effect to the edge of the display.

According to an embodiment, even when the display of the execution screen of the application is interrupted, the brief information of the application may be continuously displayed on the display, so that the user is able to continue to identify the state information of the application.

According to an embodiment, an edge lighting effect may be provided on the edge path of the display from the position where the brief information of the application is displayed to a specified edge handler, thereby informing the user that the information of the application is able to be identified through the edge handler.

According to an embodiment, information of a running application as well as the list of applications may be provided to the edge panel displayed on the left or right side of the display, thereby providing a clearer visual effect to the user.

### [Brief Description of Drawings]

FIG. 1 is a block diagram of an electronic device in a network environment according to an embodiment.
FIG. 2 is a diagram illustrating an example of providing an edge lighting effect in an electronic device according to an embodiment.
FIG. 3 is a flowchart illustrating an operation method of an electronic device according to an embodiment.
FIG. 4A and FIG. 4B are diagrams illustrating an example of displaying an edge lighting effect on an edge of a display in an electronic device according to an embodiment.
FIG. 5 is a flowchart illustrating a method of providing an edge lighting effect in an electronic device according to an embodiment.
FIG. 6A and FIG. 6B are diagrams illustrating an example of displaying an edge lighting effect on an edge of a display in an electronic device according to an embodiment.
FIG. 7 is a flowchart illustrating a method of displaying a color on an edge handler in an electronic device according to an embodiment.
FIG. 8A and FIG. 8B are diagrams illustrating an example of displaying a color corresponding to an application on an edge handler in an electronic device according to an embodiment.
FIG. 9A and FIG. 9B are diagrams illustrating an example of displaying edge lighting effects and colors of different applications in an electronic device according to an embodiment.
FIG. 10A and FIG. 10B are diagrams illustrating an example of providing an edge lighting effect without an edge handler in an electronic device according to an embodiment.
FIG. 11A and FIG. 11B are diagrams illustrating an example of applying edge lighting effects differently depending on a device structure in an electronic device according to an embodiment.
FIG. 12A and FIG. 12B are diagrams illustrating an example of providing information of an application to an edge panel in an electronic device according to an embodiment.

### [Mode for the Invention]

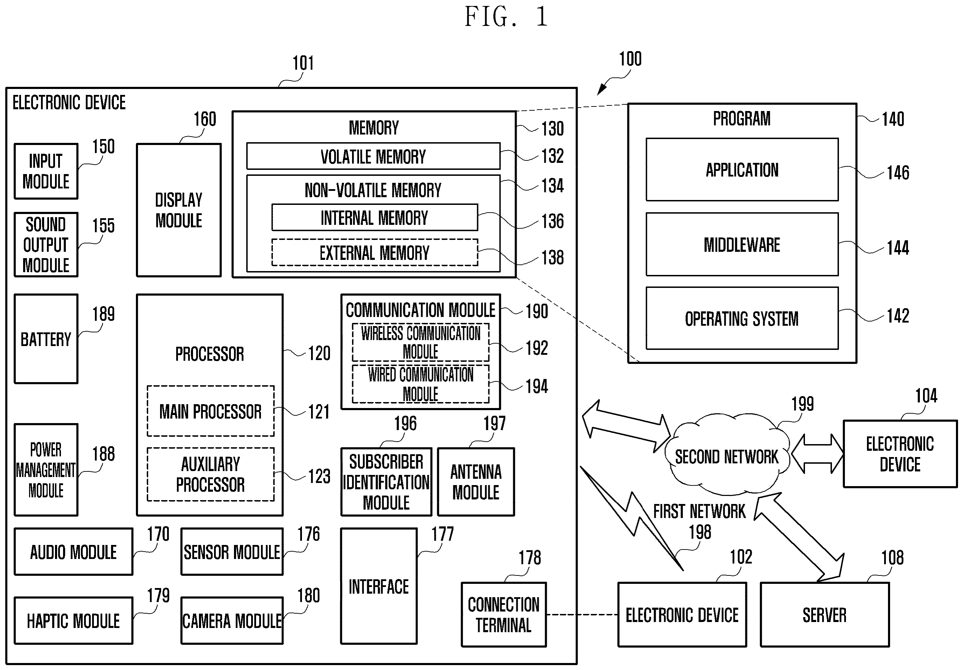

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

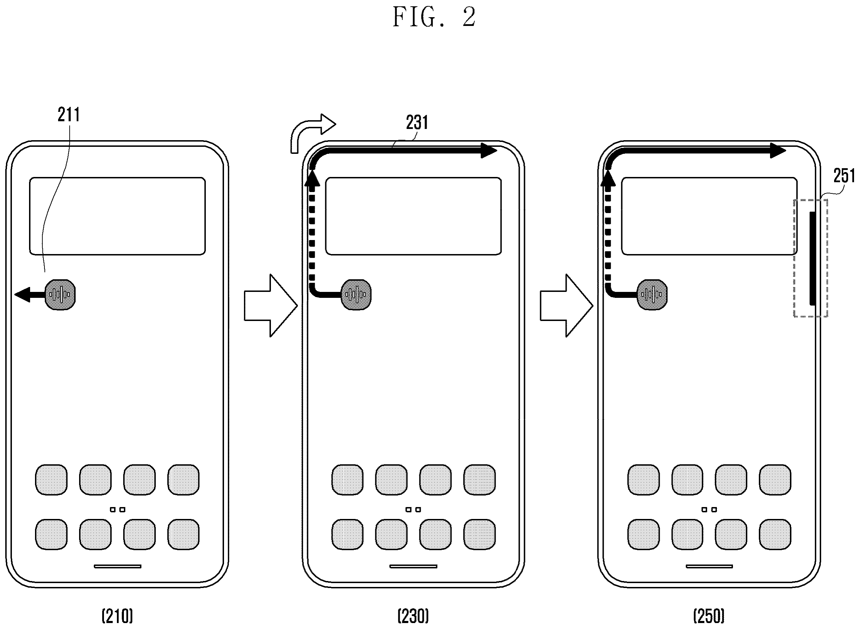

FIG. 2 is a diagram illustrating an example of providing an edge lighting effect in an electronic device according to an embodiment.

Referring to FIG. 2, an electronic device (e.g., the electronic device 101 in FIG. 1) according to an embodiment may detect a user input to interrupt the display of an execution screen of an application displayed on a display (e.g., the display module 160 in FIG. 1) of the electronic device 101. The application may be an application that needs to display the current state of an application, such as a recorder, a timer, or a phone. The application may be configured by a user or configured as a default in the electronic device 101. Interrupting the display of the execution screen of the application may indicate stopping the display of the execution screen of the application on the display module 160 due to transition to a home screen or execution of another application, and switching to a background process to execute the same.

The electronic device 101 may display a first user interface 210 on the display module 160 in response to the user input. The first user interface 210 may include brief information 211 of the application on a home screen. The home screen may display icons or widget information for one or more applications. Since the electronic device 101 has stopped the display of the execution screen of the running application according to the user input, it may display the brief information 211 of the application on the home screen. For example, the brief information 211 of the application may be intended to briefly display the current state of the application. In the case where the application is a timer, the time counting information (e.g., minutes (01): seconds (38)) may be displayed as the brief information of the application. In the case where the application is a phone, the call time information may be displayed as the brief information of the application.

Although the brief information 211 of the application is displayed in the form of an icon in the drawing, the display form (or shape) of the brief information 211 of the application may vary. The brief information 211 of the application may include at least one of text, an image (e.g., an icon), or a video.

According to an embodiment, the electronic device 101 may display the brief information 211 of the application in a display area adjacent to an edge of the display module 160. The edge of the display module 160 may be an edge area that is an end of the display module 160, which is adjacent to the bezel of the electronic device 101. Alternatively, the electronic device 101 may display the brief information 211 of the application in a specified position of the home screen. Alternatively, the electronic device 101 may configure the position for displaying information associated with the application differently depending on the application.

After displaying the brief information 211 of the application, the electronic device 101 may display a second user interface 230 that provides an edge lighting effect 231 to the edge of the display module 160. The second user interface 230 may display an edge lighting effect 231 from a first edge point of the display module 160 corresponding (e.g., adjacent) to the position where the brief information 211 of the application is displayed to a second edge point of the display module 160 corresponding to the edge handler. The edge lighting effect 231 may be displaying a color corresponding to the application along the edge path of the display module 160. The color corresponding to the application may be configured by the developer of applications. The electronic device 101 may change the color corresponding to the application, which displays the edge lighting effect 231, based on a user's input. For example, the color corresponding to a phone application may be green, and the color corresponding to a recording application may be red. The user may identify which application it is only by the color provided through the edge lighting effect 231.

A handle-type user interface (UI) may be displayed on the edge of the display module 160. A representative example of the handle-type UI is an edge handler. The edge handler may be a UI displayed adjacent to the edge area of the display in the form of a handle that serves to pull out an edge panel, which is normally hidden, into the display module 160 (e.g., to display it on the screen) in order to quickly execute an application. When a user input for selecting (e.g., touching) the edge handler and then dragging it toward the center of the display module 160 is detected, the electronic device 101 may display the hidden edge panel and display a list of applications frequently used by the user on the edge panel.

The edge handler may be displayed on the left edge or right edge of the display module 160. The position of the edge handler may be configured as a default in the electronic device 101. The position of the edge handler may be changed by the user to, for example, the upper left or lower right. For example, the electronic device 101 may accumulate the user's application usage history for a configured period (e.g., one day, one week, or one month) and, based on the accumulated application usage history, include one or more applications (e.g., application icons) in the edge panel. As another example, the electronic device 101 may receive, from the user, an input for selecting an application that the user wishes to quickly execute, and may add the same to the edge panel. The user may select an application icon included in the edge panel, thereby executing the selected application.

In addition, the edge panel may include an application list for executing two or more applications through a multi-window. For example, the edge panel may include one icon in which the icon of a first application and the icon of a second application are combined. When the icon in which two icons are combined is selected, the electronic device 101 may display the execution screen of the first application and the execution screen of the second application on the display module 160 in the form of a multi-window.

The electronic device 101 may display a third user interface 250 in which the edge lighting effect 231 displayed on the edge (or edge path) of the display module 160 enters the edge handler 251. The third user interface 250 may be configured such that a color corresponding to the application is displayed on the edge handler 251. The color displayed on the edge lighting effect 231 and the color displayed on the edge handler 251 may be the same.

The electronic device 101 may provide a new user experience by displaying a visual cue such as the edge lighting effect 231 on the edge handler included in the edge of the display module 160. When the user selects the edge handler 251, the electronic device 101 may display an execution screen of the application. Alternatively, when the edge handler 251 is selected, the electronic device 101 may display brief information 211 of the application in a specified area (attention area) within the edge panel. When a user input for selecting the brief information 211 of the application included in the specified area within the edge panel is received, the electronic device 101 may display the execution screen of the application in the entire area of the display module 160.

An electronic device 101 according to an embodiment of the disclosure may include a display 160, a memory 130, and a processor 120, wherein instructions stored in the memory may be configured to cause, when executed by the processor, the electronic device to detect, on an execution screen of an application displayed on the display, a user input to interrupt display of the execution screen of the application, display information associated with the application on the display in response to the user input, and display a color corresponding to the application at a position where the information associated with the application is displayed and on a handle-type user interface (UI).

The handle-type UI may be a UI displayed adjacent to a left edge area or right edge area of the display, and the instructions may be configured to cause, when executed by the processor, the electronic device to display, in a case where a user input for selecting the handle-type UI and then dragging it toward the center of the display is detected, a hidden edge panel and display a list of frequently used applications on the edge panel.

The instructions may be configured to cause, when executed by the processor, the electronic device to sequentially display a color corresponding to the application at a position where the information associated with the application is displayed and on the handle-type UI.

The operation of sequentially displaying may include an operation of displaying an edge lighting effect along an edge path of the display from a position where the information associated with the application is displayed to a position where the handle-type UI is displayed.

The instructions may be configured to cause, when executed by the processor, the electronic device to calculate a shortest path from the position where the information associated with the application is displayed to the position where the handle-type UI is displayed through the edge area of the display, and display the edge lighting effect on the edge of the display, based on the calculated shortest path.

The instructions may be configured to cause, when executed by the processor, the electronic device to display the edge lighting effect on the edge of the display from a first edge point of the display corresponding to the position where the information associated with the application is displayed to a second edge point of the display corresponding to the handle-type UI.

The color displayed on the edge lighting effect and the color displayed on the handle-type UI may be similar colors of the same series or may be the same.

The instructions may be configured to cause, when executed by the processor, the electronic device to perform control such that an edge lighting effect is displayed while rotating along the edge of the display or such that the edge lighting effect is displayed to blink, based on a current state of the application, while the color corresponding to the application is displayed on the handle-type UI.

The instructions may be configured to cause, when executed by the processor, the electronic device to execute a second application, based on a user input, while a first color of the application is displayed on the handle-type UI, detect a user input to interrupt display of an execution screen of the second application, display information associated with the second application on the display in response to the user input, and display a second edge lighting effect on the edge of the display from a first edge point of the display corresponding to the position where the information associated with the second application is displayed to a second edge point of the display corresponding to the handle-type UI.

The instructions may be configured to cause, when executed by the processor, the electronic device to display the second edge lighting effect to the edge of the display corresponding to the handle-type UI, and then display a color corresponding to the second application on the handle-type UI.

The first color displayed as the edge lighting effect and a second color displayed as the second edge lighting effect may be configured to be different from each other.

The instructions may be configured to cause, when executed by the processor, the electronic device to display the first color and the second color on the handle-type UI.

The instructions may be configured to cause, when executed by the processor, the electronic device to display both the first color and the second color on the handle-type UI or display them alternately thereon.

The instructions may be configured to cause, when executed by the processor, the electronic device to change the position where the information associated with the application is displayed, based on a user input of dragging and dropping the information associated with the application.

The instructions may be configured to cause, when executed by the processor, the electronic device to control, while the color corresponding to the application is displayed on the handle-type UI, the color displayed on the handle-type UI, based on the current state of the application.

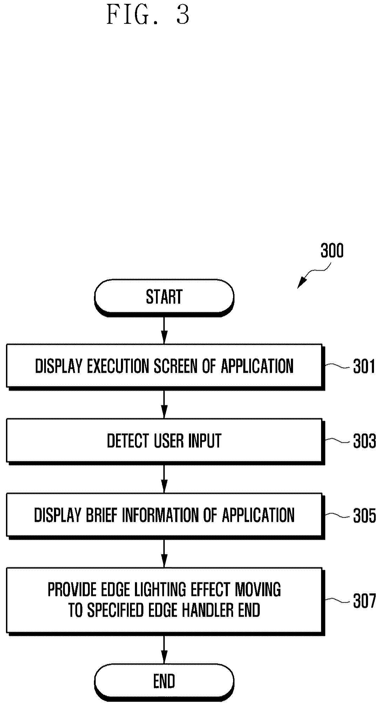

FIG. 3 is a flowchart 300 illustrating an operation method of an electronic device according to an embodiment.

Referring to FIG. 3, in operation 301, a processor (e.g., the processor 120 in FIG. 1) of an electronic device (e.g., the electronic device 101 in FIG. 1) according to an embodiment may display an execution screen of an application. For example, the processor 120, in response to selection of an icon of an application by the user, may execute the application and display an execution screen of the executed application on a display (e.g., the display module 160). The application may be an application that need to display the current state of the application, such as a recorder, a timer, or a phone. The application may be configured by the user or configured as a default in the electronic device 101.

In operation 303, the processor 120 may detect a user input. For example, the user input may be for closing the execution screen of the application. The processor 120 may detect the user input while the execution screen of the application is being displayed in operation 301. The processor 120 may receive an input for selecting a home button to transition to the home screen, or may detect a user input for executing another application.

In operation 305, the processor 120 may display brief information of the application on the display (e.g., the display module 160 in FIG. 1). The brief information of the application may be information indicating the current state of the application. When the screen transitions to the home screen in operation 303, the processor 120 may display brief information of the application on an empty space of the home screen. The home screen may display icons for one or more applications installed on the electronic device 101. The information of the application may be displayed on an empty space where no icons are displayed or on a home button in the home screen.

According to an embodiment, in the case where the processor 120 displays an execution screen of another application (e.g., a second application) in operation 303 and interrupts the display of the execution screen of the application (e.g., a first application) displayed in operation 301, the processor 120 may display the brief information of the application to be overlaid on the execution screen of the other application. The brief information of the above application may be displayed in an area of the execution screen of the other application, such as a text area with a low refresh rate, an area other than a user interaction area such as a specific button, or an area other than a region of interest (ROI).

According to an embodiment, the processor 120 may display the brief information of the application on the edge panel for a specified period of time. For example, when the processor 120 interrupts the display of the execution screen of the application due to the execution of another application rather than transition to the home screen, the processor 120 may display the brief information of the application on the edge panel. Alternatively, when the processor 120 interrupts the display of the execution screen of the application, the processor may display the brief information of the application on the edge panel for a specified period of time and display a specified color on the edge handler as the edge panel is closed.

According to an embodiment, the processor 120 may display the brief information of the application in a display area adjacent to the edge of the display module 160. The edge of the display module 160 may be an edge area that is an end portion of the display module 160 adjacent to a bezel of the electronic device 101. Alternatively, the processor 120 may display the brief information of the application in a specified position on the home screen. Alternatively, the processor 120 may configure a position for displaying the brief information of the application differently depending on the application.

In operation 307, the processor 120 may provide an edge lighting effect that moves to a specified edge handler. Releasing the display of the brief information of the application performed in operation 305 and providing the edge lighting effect in operation 307 may be performed substantially simultaneously. For example, an effect such as a size reduction of the brief information of the application may be provided, and then an edge lighting effect may begin to be provided as the edge of the display module adjacent to the position where the brief information of the application is displayed moves to an edge lighting start point.

The edge lighting effect may display a color corresponding to the application on the edge of the display module 160. The edge lighting effect may display light moving along the edge path of the display module 160, or may display the entire edge path of the display module 160 blinking. For example, the processor 120 may display the edge lighting effect from a first edge point of the display module 160 corresponding (e.g., adjacent) to the position where the brief information of the application is displayed to a second edge point of the display module 160 corresponding to the position where the specified edge handler is displayed. For example, the edge of the display module 160 corresponding to the position where the brief information of the application is displayed may be located at the upper left edge of the display module 160, and the edge handler may be located at the upper right edge of the display module 160.

In this case, the processor 120 may display a color, as an edge lighting effect, corresponding to the application on the edge of the display module 160 from the upper left edge (e.g., first edge point) of the display module 160 to the upper right edge (e.g., second edge point) of the display module 160. The edge lighting effect may display a color on the edge of the display module 160 while moving from the upper left edge of the display module 160 to the upper right edge of the display module 160 where the edge handler is located.

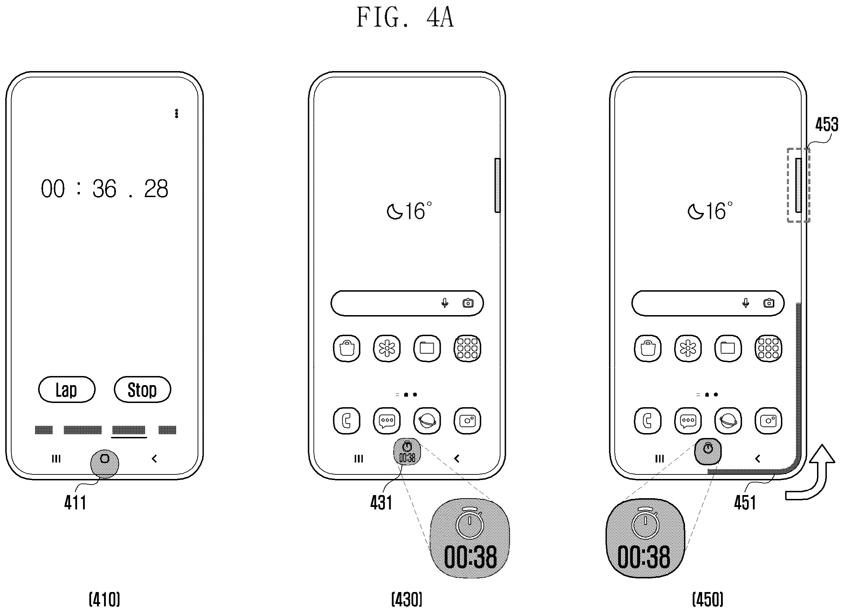

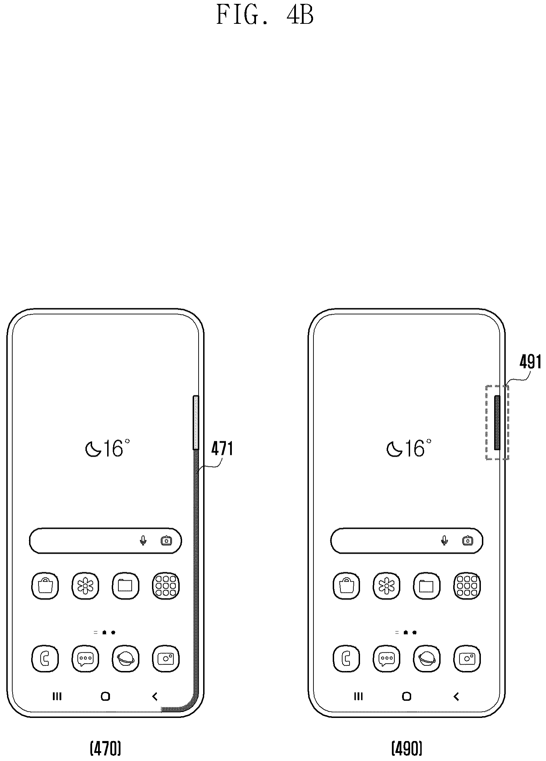

FIG. 4A and FIG. 4B are diagrams illustrating an example of displaying an edge lighting effect on an edge of a display in an electronic device according to an embodiment.

Referring to FIG. 4A, a processor (e.g., the processor 120 in FIG. 1) of an electronic device (e.g., the electronic device 101 in FIG. 1) according to an embodiment may display a first user interface 410 including an execution screen of an application on a display (e.g., the display module 160 in FIG. 1). The processor 120 may detect a user input 411 to interrupt the display of the execution screen of the application while the execution screen of the application is being displayed.

The processor 120 may display a second user interface 430 on the display module 160 as the user input 411 is detected. The second user interface 430 may be configured such that information (e.g., 431) associated with the application is displayed on a home button. The information 431 associated with the application may be brief information of the application. For example, in the case where the executed application is a "timer," the information 431 associated with the application may include a clock image and time counting information (00:38).

The processor 120, after displaying the information 431 associated with the application, may display a third user interface 450 that provides an edge lighting effect 451 to the edge of the display module 160. The third user interface 450 may provide an edge lighting effect 451 from a first edge point of the display module 160 (e.g., the lower middle edge of the display module 160) corresponding to the position where the information 431 associated with the application is displayed. The edge of the display module 160 may be an edge area that is an end portion of the display module 160 adjacent to the bezel of the electronic device 101. The edge lighting effect 451 may display a color corresponding to the application on the edge of the display module 160. The color corresponding to the application may be configured by the developer of the application. The processor 120 may change the color corresponding to the application to display the edge lighting effect 451, based on a user's input.

Referring to FIG. 4B, the processor 120 may display a fourth user interface 470 that provides an edge lighting effect 471 entering the edge handler 491 to the edge of the display module 160. The fourth user interface 470 may be configured such that the displayed edge lighting effect 471 moves along the edge of the display module 160 from the first edge point of the display module 160 (e.g., the lower middle edge of the display module 160) corresponding to the position where the information 431 associated with the application is displayed to the second edge point of the display module 160 (e.g., the upper right edge of the display module 160) where the edge handler 491 is located.

When the edge lighting effect 471 moves to the edge handler 491, the processor 120 may display a fifth user interface 490 that displays a color corresponding to the application on the edge handler 491. The fifth user interface 490 may be configured such that a color corresponding to the application is displayed on the edge handler 491. When the edge lighting effect moves to the edge handler, the processor 120 may display an application list including brief information about the application on the edge panel, and as the edge panel is closed after a specified period of time, the color of the edge handler may switch to a color corresponding to the application. The color displayed on the edge lighting effect 471 and the color displayed on the edge handler 491 may be similar colors of the same series or may be the same. According to an embodiment, the processor 120 may alternately display a color corresponding to the application and a specified color (e.g., white) on the edge handler 491.

When the user selects the edge handler 491 while the fifth user interface 490 is being displayed, the processor 120 may display the execution screen of the application. Alternatively, when the edge handler 491 is selected, the processor 120 may display an application list (e.g., application icons) including the application.

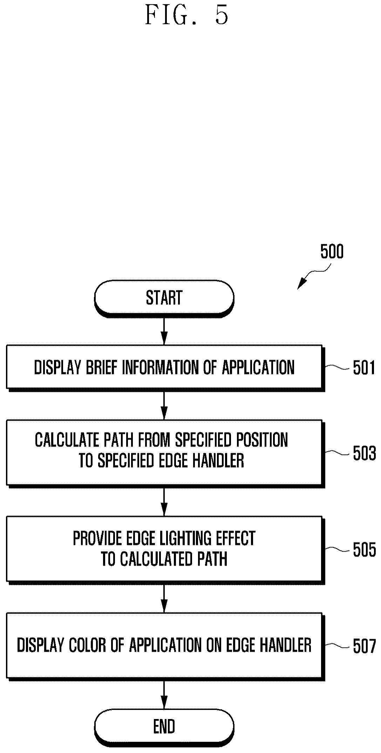

FIG. 5 is a flowchart 500 illustrating a method of providing an edge lighting effect in an electronic device according to an embodiment.

Referring to FIG. 5, in operation 501, a processor (e.g., the processor 120 in FIG. 1) of an electronic device (e.g., the electronic device 101 in FIG. 1) according to an embodiment may display brief information of an application on a display (e.g., the display module 160 in FIG. 1). The application may be an application that needs to display the current state of the application, such as a recorder, a timer, or a phone. The application may be configured by the user or configured as a default in the electronic device 101. The processor 120 may display the brief information of the application on an empty space on the home screen. The home screen may display icons for one or more applications installed in the electronic device 101. The brief information of the application may be displayed on an empty space where no icons are displayed or on a home button in the home screen.

In operation 503, the processor 120 may calculate a path from a specified position to a specified edge handler. The specified position may indicate an edge of the display module 160 corresponding to a position where the brief information of the application is displayed. The edge handler may be displayed on the left edge or right edge of the display module 160. The position of the edge handler may be configured as a default in the electronic device 101. The position of the edge handler may be changed by the user to, for example, the upper left or lower right. The edge handler is intended to quickly execute an application, and may be a UI displayed adjacent to the edge area of a display in the form of a handle that pulls out an edge panel, which is normally hidden, into the display module 160 (e.g., displays it on the screen). When a user input for selecting (e.g., touching) the edge handler and then dragging it toward the center of the display module 160 (e.g., toward the inside of the screen) is detected, the electronic device 101 may display the hidden edge panel and display a list of applications frequently used by the user on the edge panel.

For example, the processor 120 may accumulate the user's application usage history for a configured period (e.g., one day, one week, or one month) and, based on the accumulated application usage history, include one or more applications (e.g., application icons) in the edge panel. As another example, the processor 120 may receive, from the user, an input for selecting an application that the user wishes to quickly execute, and may add the same to the edge panel. The user may select an application icon included in the edge panel, thereby executing the selected application. In addition, the edge panel may include an application list for executing two or more applications through a multi-window.

According to an embodiment, the processor 120 may calculate a shortest path from the specified position to the position of the edge handler through the edge area of the display. In order to provide an effective edge lighting effect, the processor 120 may calculate a shortest path from a first edge point of the display module 160 corresponding to a position where the brief information of the application is displayed to a second edge point of the display module 160 where the edge handler is displayed.

In operation 505, the processor 120 may provide an edge lighting effect, based on the calculated path. The edge lighting effect may display light moving along the edge path of the display module 160, or may display the entire edge path of the display module 160 blinking. For example, the specified position may be the left middle edge (e.g., a first edge point) of the display module 160, and the edge handler may be the upper right edge (e.g., a second edge point) of the display module 160. In this case, the processor 120 may provide an edge lighting effect along the edge of the display from the left middle edge of the display module 160 to the upper right edge of the display module 160.

In operation 507, the processor 120 may display a color corresponding to the application on the edge handler. After providing the edge lighting effect entering the edge handler, the processor 120 may display a color corresponding to the application on the edge handler. The color displayed on the edge lighting effect and the color displayed on the edge handler may be similar colors of the same series or may be the same. According to an embodiment, the processor 120 may alternately display a color corresponding to the application and a specified color (e.g., white) on the edge handler 491.

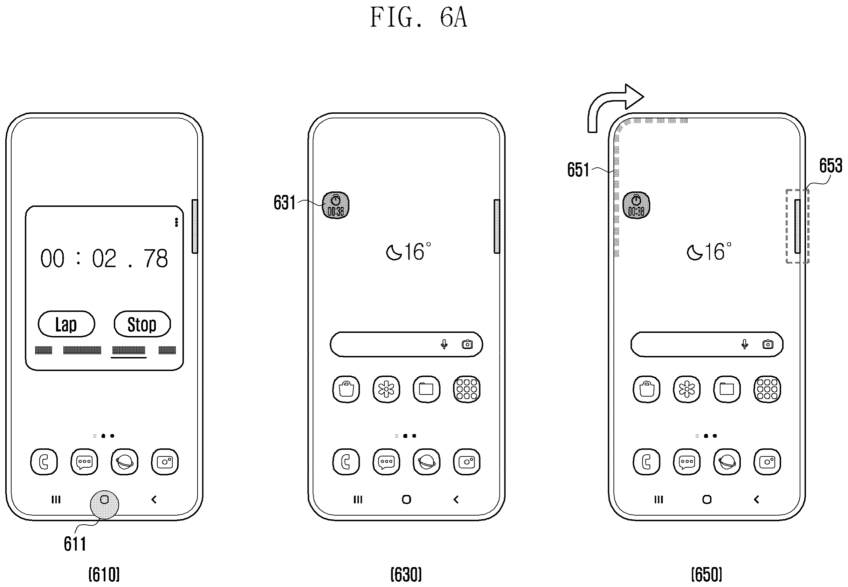

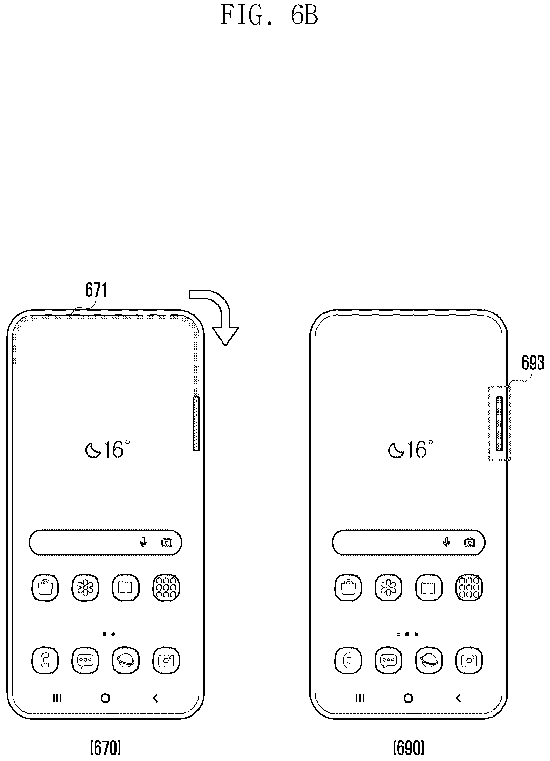

FIG. 6A and FIG. 6B are diagrams illustrating an example of displaying an edge lighting effect on an edge of a display in an electronic device according to an embodiment.

Referring to FIG. 6A, a processor (e.g., the processor 120 in FIG. 1) of an electronic device (e.g., the electronic device 101 in FIG. 1) according to an embodiment may display a first user interface 610 including an execution screen of an application on a display (e.g., the display module 160 in FIG. 1). The processor 120 may execute the application as a pop-up window that displays the execution screen of the application on a part of the display module 160, instead of displaying the execution screen of the application on the entire display module 160. The first user interface 610 may display the execution screen of the application on a part of the display module 160 and display a home screen on another part of the display module 160.

The first user interface 610 may be configured such that the execution screen of the application is displayed to be overlaid on the home screen. The processor 120 may detect a user input 611 to interrupt the display of the execution screen of the application while the execution screen of the application is being displayed. The user input 611 may be an input of pressing the home button as illustrated. When a specified event (e.g., incoming call or alarm occurrence) is detected while the execution screen of the application is being displayed, the processor 120 may also interrupt the display of the execution screen of the application by switching the screen.

The processor 120 may display a second user interface 630 on the display module 160 when the user input 611 is detected. The second user interface 630 may be configured such that information 631 associated with the application is displayed on an empty space of the home screen. The information 631 associated with the application may be brief information of the application. For example, in the case where the executed application is a "timer," the information 631 associated with the application may include a clock image and time counting information (00:38).

The processor 120, after displaying the information 631 associated with the application, may display a third user interface 650 that provides an edge lighting effect 651 to the edge of the display module 160. The third user interface 650 may provide an edge lighting effect 651 from the edge of the display module 160 (e.g., the left middle edge of the display module 160) corresponding to the position where the information 631 associated with the application is displayed. The edge of the display module 160 may be an edge area that is an end of the display module 160, which is adjacent to the bezel of the electronic device 101. The edge lighting effect 651 may display a color corresponding to the application on the edge of the display module 160. The color corresponding to the application may be configured by the developer of the application. The processor 120 may change the color corresponding to the application to display the edge lighting effect 651, based on a user's input.

Referring to FIG. 6B, the processor 120 may display a fourth user interface 670 that provides an edge lighting effect 671 entering an edge handler 653 to the edge of the display module 160. The fourth user interface 470 may be configured such that the displayed edge lighting effect 671 moves along the edge of the display module 160 from a first edge point of the display module 160 (e.g., the left middle edge of the display module 160) corresponding to the position where the information 631 associated with the application is displayed to a second edge point of the display module 160 (e.g., the upper right edge of the display module 160) where the edge handler 691 is located.

When the edge lighting effect 671 moves to the edge handler 693, the processor 120 may display a fifth user interface 690 that displays a color corresponding to the application on the edge handler 693. The fifth user interface 690 may be configured such that a color corresponding to the application is displayed on the edge handler 693. The color displayed on the edge lighting effect 671 and the color displayed on the edge handler 693 may be similar colors of the same series, or may be the same.

When the user selects the edge handler 693 while the fifth user interface 690 is being displayed, the processor 120 may display the execution screen of the application. Alternatively, when the edge handler 693 is selected, the processor 120 may display an application list (e.g., application icons) that includes the application on the edge panel. When the edge lighting effect moves to the edge handler, the processor 120 may display an application list including brief information of the application on the edge panel, and as the edge panel is closed after a specified period of time, the color of the edge handler may switch to a color corresponding to the application.

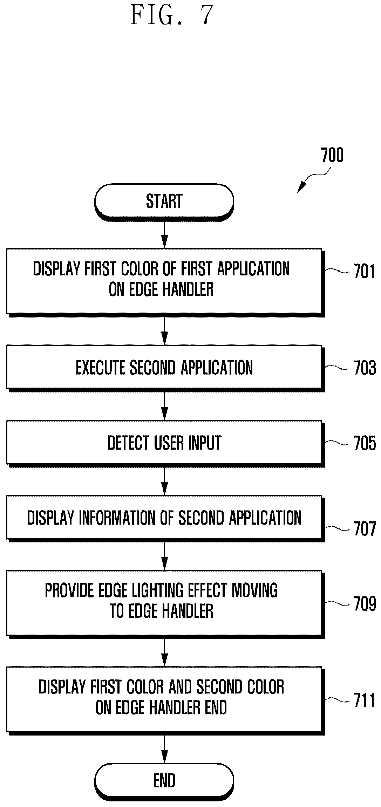

FIG. 7 is a flowchart 700 illustrating a method of displaying a color on an edge handler in an electronic device according to an embodiment.

Referring to FIG. 7, in operation 701, a processor (e.g., the processor 120 in FIG. 1) of an electronic device (e.g., the electronic device 101 in FIG. 1) according to an embodiment may display a first color of a first application on the edge handler. The processor 120 may display the first color on the edge handler included in the edge of a display (e.g., the display module 160 in FIG. 1). The state in which the first color is displayed on the edge handler may indicate a state executing the first application and then providing an edge lighting effect for the first application.

In operation 703, the processor 120 may execute a second application. The first application and the second application may be applications that need to display the current states of the applications. For example, the first application may be a recording application, and the second application may be a phone application. The processor 120 may display the execution screen of the second application on the display module 160.

In operation 705, the processor 120 may detect a user input. The processor 120 may detect a user input to interrupt the display of the execution screen of the second application while the execution screen of the second application is being displayed. For example, the processor 120 may receive an input for selecting a home button to transition to the home screen.

In operation 707, the processor 120 may display information of the second application on the display module 160. The information of the second application may be brief information indicating the current state of the second application. When transitioning to the home screen in operation 705, the processor 120 may display information of the second application on the empty space of the home screen. For example, the caller image and the call time information may be displayed as the brief information of the second application. The size of the brief information of the second application may vary depending on the data (e.g., the amount of data) included in the brief information.

In operation 709, the processor 120 may provide an edge lighting effect moving to the edge handler. The edge lighting effect (e.g., a second edge lighting effect) may be displaying a color corresponding to the second application on the edge of the display module 160. For example, the processor 120 may display the edge lighting effect on the edge of the display module 160 from the edge of the display module 160 corresponding to the position where the information of the second application is displayed to the position where the edge handler is displayed.

In operation 711, the processor 120 may display a first color and a second color on the edge handler. The first color may be a color corresponding to the first application, and the second color may be a color corresponding to the second application. The processor 120 may display the first color and the second color alternately on the edge handler. For example, the processor 120 may display the first color for 3 seconds, display the second color for 3 seconds after 3 seconds, and display the first color for 3 seconds again after 3 seconds. Alternatively, the processor 120 may display both the first color and the second color on the edge handler. For example, the processor 120 may divide the edge handler into two parts, display the first color on the first part, and display the second color on the second part.

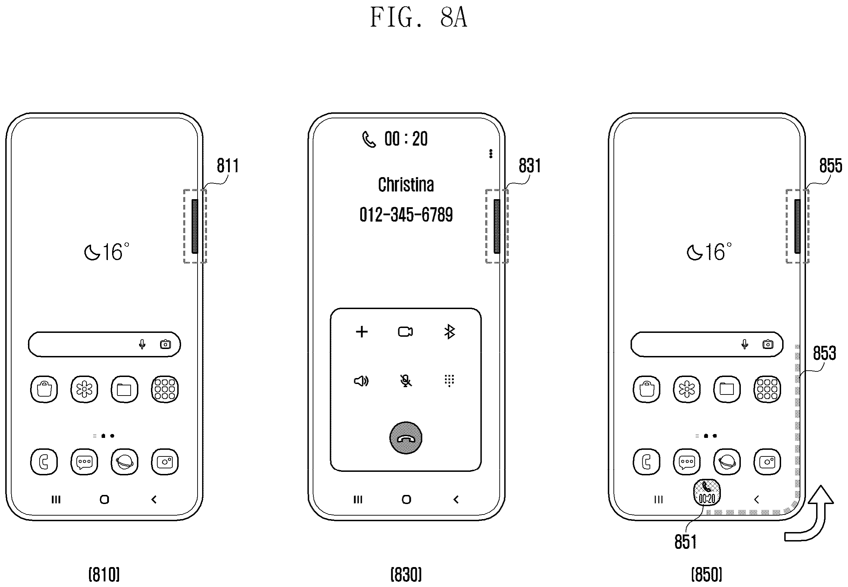

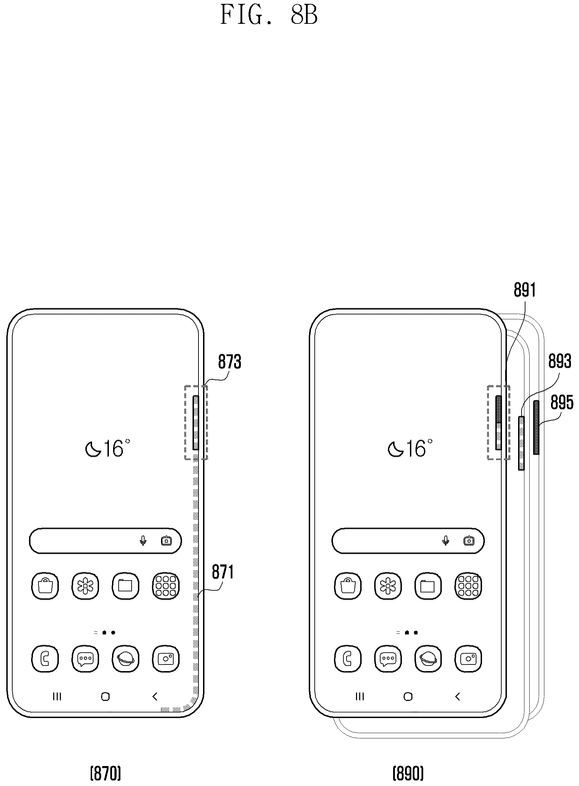

FIG. 8A and FIG. 8B are diagrams illustrating an example of displaying a color corresponding to an application on an edge handler in an electronic device according to an embodiment.

Referring to FIG. 8A, a processor (e.g., the processor 120 in FIG. 1) of an electronic device (e.g., the electronic device 101 in FIG. 1) according to an embodiment may display a first user interface 810 in which a first color of a first application is displayed on an edge handler 811 of a display (e.g., the display module 160 in FIG. 1). The edge handler 811 may be displayed on the edge of the display module 160. The processor 120 may receive a request for execution of a second application from a user while displaying the color corresponding to the first application on the edge handler 811. For example, the first application may be a recording application, and the first color may be red. This example is provided only to help understand the disclosure, and the disclosure is not limited to the description.

The processor 120 may display a second user interface 830 including an execution screen of the second application on the display module 160 according to the request for execution of the second application. The second user interface 830 may display the first color of the first application on the edge handler 831 and include the execution screen of the second application. The second application may be a phone application, and a second color configured for the second application may be green.

The processor 120 may detect a user input to interrupt the display of the execution screen of the second application while the second user interface 830 is being displayed. Based on the user input, the processor 120 may display a third user interface 850 including information 851 of the second application on the display module 160. The information 851 of the second application may include a phone image and call time information. For example, the information 851 of the second application may include at least one of text, an image, or a video. The third user interface 850 may include an edge lighting effect 853 and an edge handler 855 on the edge of the display module 160.

The edge lighting effect 853 may indicate the second color of the second application. The edge handler 855 may indicate the first color. The first color (e.g., red) may be different from the second color (e.g., green). The edge lighting effect 853 may be provided to move along the edge of the display module 160 from a first edge point of the display module 160 (e.g., the lower middle edge of the display module 160) corresponding to the position where the information 851 of the second application is displayed to a second edge point of the display module 160 (e.g., the upper right edge of the display module 160) corresponding to the edge handler 855.

Referring to FIG. 8B, the processor 120 may display a fourth user interface 870 that provides an edge lighting effect 871 entering the edge handler 873 to the edge of the display module 160. The fourth user interface 870 may be configured such that the displayed edge lighting effect 871 moves along the edge of the display module 160 from the first edge point of the display module 160 (e.g., the lower middle edge of the display module 160) corresponding to the position where the information 851 of the second application is displayed to the second edge point of the display module 160 (e.g., the upper right edge of the display module 160) where the edge handler 873 is located.

When the edge lighting effect 871 moves to the edge handler 873, the processor 120 may display a fifth user interface 890 that displays a first color and a second color on the edge handlers 891, 893, and 895. The fifth user interface 890 may display the first color of the first application and the second color of the second application on the edge handlers 891, 893, and 895. For example, the first edge handler 891 may be configured such that the area of the edge handler is divided into two areas and such that the first color is displayed in the first area and the second color is displayed in the second area. The second edge handler 893 may display the second color, and the third edge handler 895 may display the first color. The processor 120 may display the second edge handler 893 and the third edge handler 895 alternately. The user may visually recognize the current state of the first application or second application by looking at the color displayed on the edge handler.

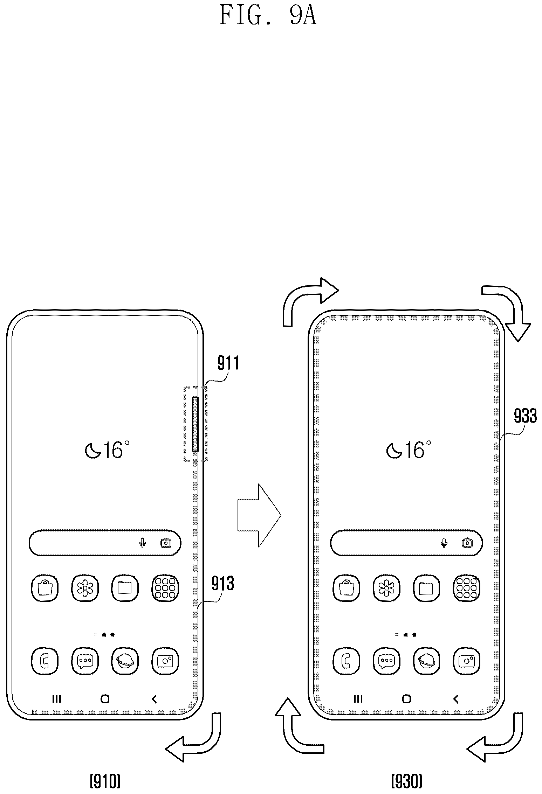

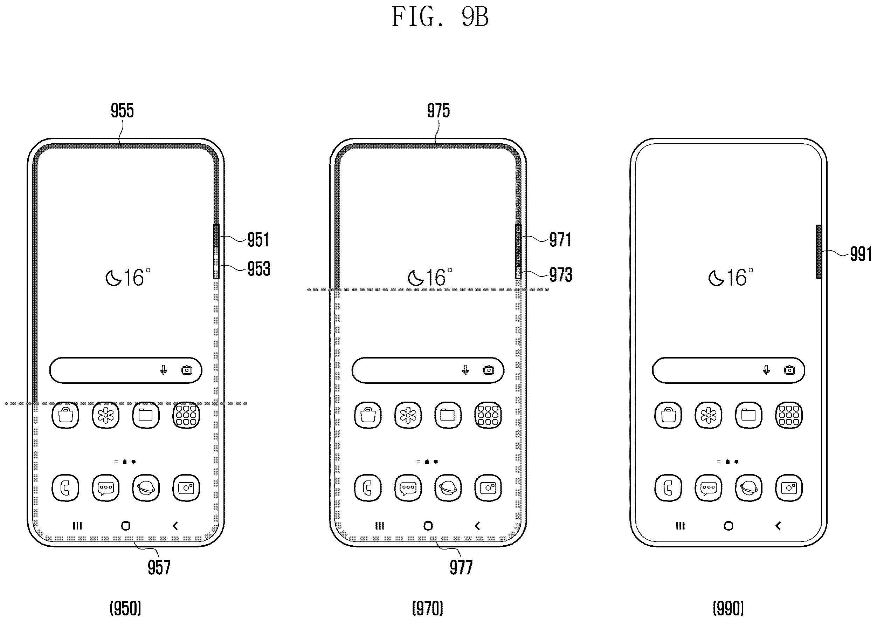

FIG. 9A and FIG. 9B are diagrams illustrating an example of displaying edge lighting effects and colors of different applications in an electronic device according to an embodiment.

Referring to FIG. 9A, a processor (e.g., the processor 120 in FIG. 1) of an electronic device (e.g., the electronic device 101 in FIG. 1) according to an embodiment may control the display of an edge lighting effect on the edge of a display (e.g., the display module 160 in FIG. 1), based on the current state of an application. If a timer is configured to 30 minutes, the processor 120 may display a first user interface 910 in which an edge lighting effect 913 is displayed to rotate on the edge of the display module 160 at a predetermined time (e.g., 10 seconds, 5 seconds, 3 seconds, etc.) before the timer reaches 30 minutes. The processor 120 may display an edge lighting effect 913 such that the edge lighting effect 913 starts from an edge handler 911, rotates along the edge of the display module 160, and then enters the edge handler 911 again. Alternatively, the processor 120 may display an edge lighting effect 933 blinking on the edge of the display module 160 when the timer is about to reach the configured time (e.g., 3 seconds before 30 minutes).

Referring to FIG. 9B, when the timer is about to reach the configured time, the processor 120 may display the edge lighting effect 933 on the edge of the display module 160 and the color on the edge handler 951 in different areas. For example, the processor 120 may display a third user interface 950 and then display a fourth user interface 970 when the timer is about to reach the configured time. The third user interface 950 may display a color corresponding to an application on a part of the edge handler 953 and display an edge lighting effect 957 on the edge of the display module 160. In the third user interface 950, the color corresponding to the application may not be displayed on another part 951 of the edge handler.

The processor 120, until a first time (e.g., 3 seconds) before the timer reaches the configured time, may not provide an edge lighting effect 955 from the upper part of the edge (e.g., a first edge point) of the display module 160 where the edge handler 951 is located to an opposite part of the edge (e.g., a second edge point) of the display module 160, and provide an edge lighting effect 957 from the lower part of the edge (e.g., a third edge point) of the display module 160 where the edge handler 953 is located to another opposite part of the edge (e.g., a fourth edge point) of the display module 160. For example, the area where the color is displayed on the edge handler may be reduced to 1/3 of the entire edge handler, and the area where the color is displayed in the edge lighting effect may be 1/3 of the entire edge of the display module 160.

The processor 120, until a second time (e.g., 2 seconds) before the timer reaches the configured time, may not provide the edge lighting effect 975 from the upper part of the edge of the display module 160 where the edge handler 971 is located to an opposite part of the edge of the display module 160, and provide the edge lighting effect 977 from the lower part of the edge of the display module 160 where the edge handler 973 is located to another opposite part of the edge of the display module 160. For example, the area where the color is displayed on the edge handler may be reduced to 2/3 of the entire edge handler, and the area where the color is displayed in the edge lighting effect may be 2/3 of the entire edge of the display module 160.

When the timer reaches the configured time, the processor 120 may provide a fifth user interface 990 from which the color displayed on the edge handler 991 was removed and the edge lighting effect was removed.

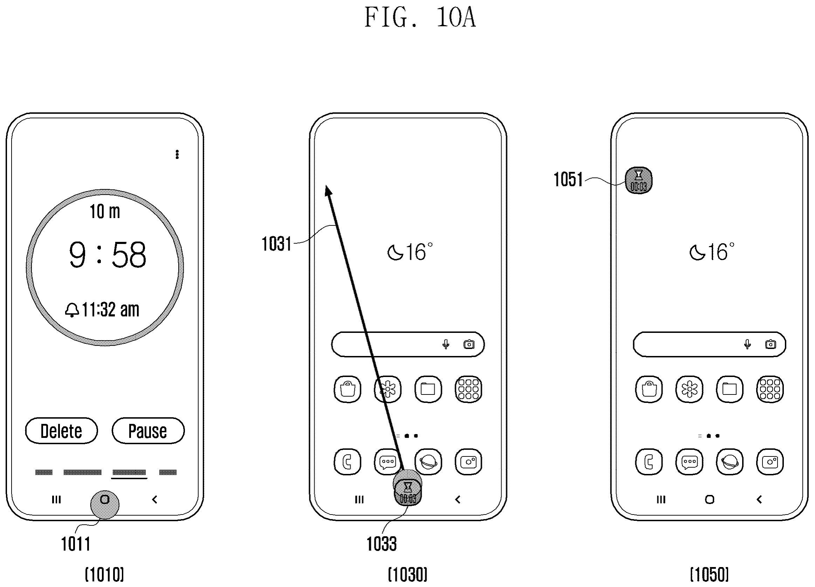

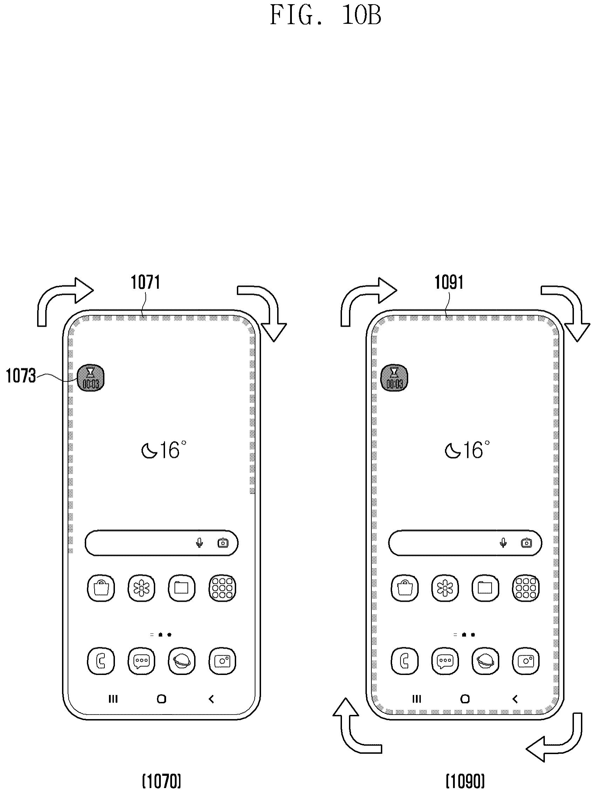

FIG. 10A and FIG. 10B are diagrams illustrating an example of providing an edge lighting effect without an edge handler in an electronic device according to an embodiment.

Referring to FIG. 10A, a processor (e.g., the processor 120 in FIG. 1) of an electronic device (e.g., the electronic device 101 in FIG. 1) according to an embodiment may display a first user interface 1010 including an execution screen of an application on a display (e.g., the display module 160 in FIG. 1). The processor 120 may detect a user input 1011 to interrupt the display of the execution screen of the application while the execution screen of the application is being displayed.

As the user input 1011 is detected, the processor 120 may display a second user interface 1030 on the display module 160. The second user interface 1030 may be configured such that information 1033 associated with the application is displayed on a home button. The information 1033 associated with the application may be brief information of the application. The processor 120 may detect a user input 1031 (e.g., drag and drop) for selecting and moving the information 1033 associated with the application.

The processor 120 may change (or move) the position of the information 1051 associated with the application, based on the user input. The processor 120 may display a third user interface 1050 in which the position of information 1051 associated with the application has been changed on the display module 160.

Referring to FIG. 10B, the processor 120 may display a fourth user interface 1070 that provides an edge lighting effect 1071 on the edge of the display module 160 after changing the position of information 1051 associated with the application. The fourth user interface 1070 may provide an edge lighting effect 1071 to the edge of the display module 160 while the information 1073 associated with the application is being displayed.

When the timer is about to reach the configured time (e.g., 3 seconds before 30 minutes), the processor 120 may display a fifth user interface 1090 that provides an edge lighting effect 1091 rotating along the edge of the display module 160. Alternatively, when the timer is about to reach the configured time (e.g., 3 seconds before 30 minutes), the processor 120 may display an edge lighting effect 1091 blinking on the edge of the display module 160. The edge lighting effect 1091 may be utilized as an additional element to recognize the current state of the application.

According to an embodiment, when the timer is about to complete its operation (e.g., 29 minutes and 57 seconds after 30 minutes are configured), the processor 120 may change the color provided to the edge lighting effect to a different color. For example, in the case where the color corresponding to the application is red, when the timer is about to complete its operation, the color provided to the edge lighting effect may be changed to blue to display the edge lighting effect blinking, or the edge lighting effect may be displayed to rotate along the edge of the display module 160.

According to an embodiment, when the timer is about to complete its operation (e.g., 29 minutes and 57 seconds after 30 minutes are configured), the processor 120 may display an edge lighting effect starting from the position of the edge handler, and a different color may start from the edge position of the display module 160, which is symmetrical to the position of the edge handler, to fill the edge. This visual effect may help the user visually recognize that the configured time of the timer is nearing completion.

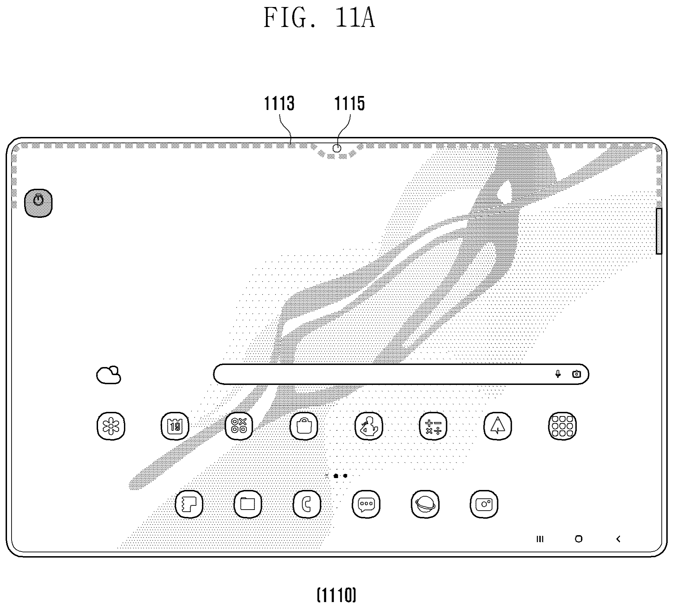

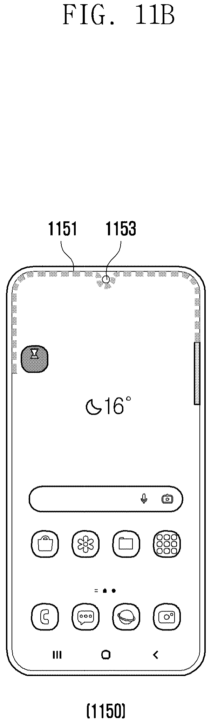

FIG. 11A and FIG. 11B are diagrams illustrating an example of applying edge lighting effects differently depending on a device structure in an electronic device according to an embodiment.

Referring to FIG. 11A, an electronic device (e.g., the electronic device 101 in FIG. 1) according to an embodiment may provide an edge lighting effect, based on an edge line of a display (e.g., the display module 160 in FIG. 1). For example, the electronic device 101 may provide an edge lighting effect 1113 along a notch line at a position where a camera 1115 is disposed, such as a first user interface 1110.

Referring to FIG. 11B, in the case where a pinch hole camera 1153 is disposed, the electronic device 101 may provide an edge lighting effect 1151 in a direction capable of conveying a sense of unity, such as a second user interface 1150, in consideration of the gap between the bezel portion of the electronic device 101 and the camera.

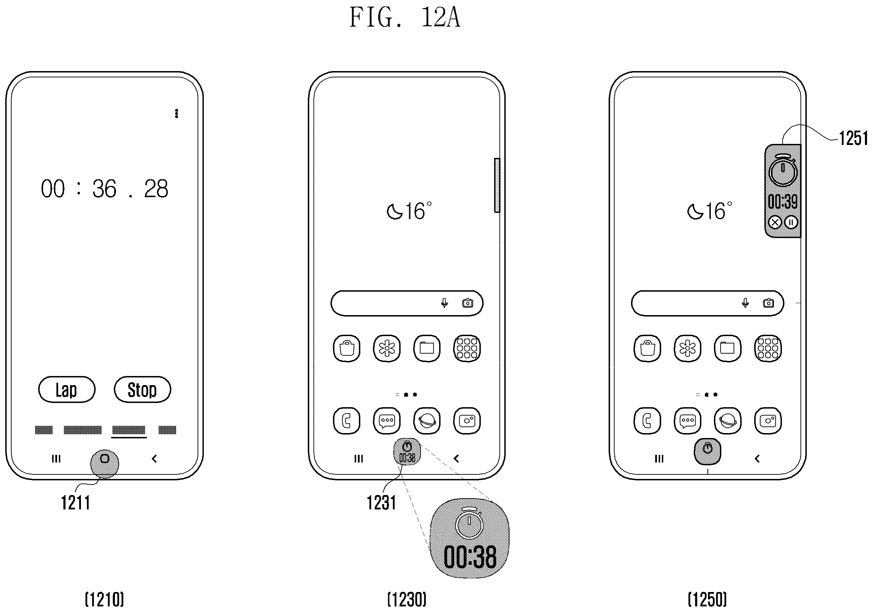

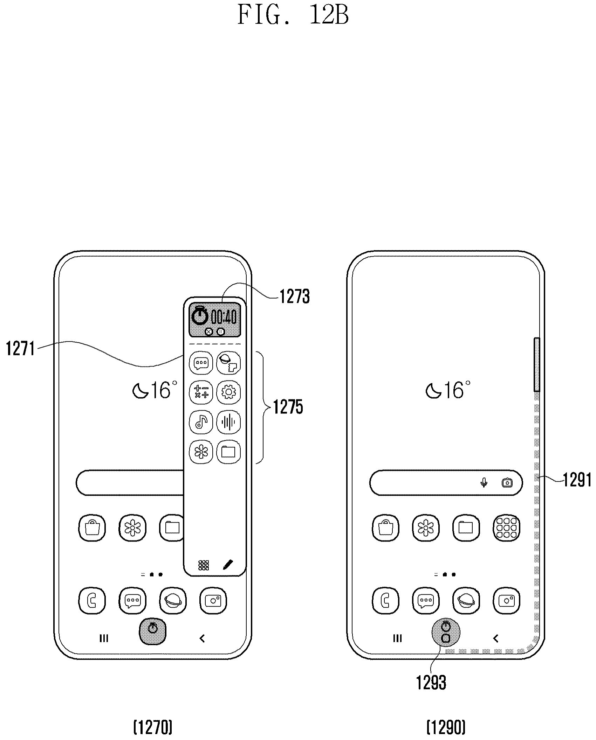

FIG. 12A and FIG. 12B are diagrams illustrating an example of providing information of an application to an edge panel in an electronic device according to an embodiment.

Referring to FIG. 12A, a processor (e.g., the processor 120 in FIG. 1) of an electronic device (e.g., the electronic device 101 in FIG. 1) according to an embodiment may display a first user interface 1210 including an execution screen of an application on a display (e.g., the display module 160 in FIG. 1). The processor 120 may detect a user input 1211 to interrupt the display of the execution screen of the application while the execution screen of the application is being displayed. The user input 1211 may be an input of touching a first object (e.g., a home button or a touch bar handle). When the user input 1211 is detected, the processor 120 may transition to a home screen, interrupt the display of the execution screen of the application on the display module 160, and switch to a background process to execute it.

As the user input 1211 is detected, the processor 120 may display a second user interface 1230 on the display module 160. The second user interface 1230 may display brief information 1231 of the application on the home button or touch bar handle. The brief information 1231 of the application may be a modification into a second object that displays the current state (e.g., ongoing state) of the application. For example, in the case where the executed application is a "timer," the brief information 1231 of the application may include a clock image and time counting information (00:38).

When there is no additional input to the second object for a predetermined period of time (e.g., n seconds) after displaying the brief information 1231 of the application, the processor 120 may display a third user interface 1250 on the display module 160. The third user interface 1250 may include a third object 1251 (e.g., an edge handler) disposed in a partial area of the edge of the display module 160. The third object 1251 may display ongoing information of the application (e.g., the brief information 1231 of the application) and a controller (e.g., pause and stop). In addition, the third user interface 1250 may include provision of an edge lighting effect, based on an edge line of the display module 160. In order to display the brief information 1231 of the application, the third object 1251 may be expanded from a first size to a second size. The first size may be smaller than the second size.

According to an embodiment, the processor 120 may display the ongoing information of the application on the second object or the third object 1251 while the ongoing state of the application is maintained, and may remove, when the ongoing state of the application ends, the display of the second object or the third object 1251. The processor 120 may display the ongoing information of the second object and the ongoing information of the third object 1251 differently from each other. For example, the processor 120 may display at least one of the information format, color, or size of the ongoing information differently between the second object and the third object 1251.

Referring to FIG. 12B, when swiping the third object 1251 toward the center of the display module 160, the processor 120 may display a fourth user interface 1270 including a fourth object 1271 on the display module 160. The fourth user interface 1270 may change the third object 1251 into a fourth object 1271 in the form of a drawer, and the fourth object 1271 may include the ongoing information of the application, a controller 1273, and a list 1275 of other applications (e.g., a list of application icons). The controller may include a first control object for the ongoing state and a second control object capable of executing other additional functions of the application.

The processor 120 may display a fifth user interface 1290 on the display module 160 when a user input 1211 is detected. The fifth user interface 1290 may display brief information 1293 of the application on the home button or the touch bar handle, and may include an edge lighting effect 1291 in which the brief information 1293 of the application moves toward the third object (e.g., the third object 1251 in FIG. 12A). The edge lighting effect 1291 may be configured such that a color corresponding to the application is displayed while moving along the edge of the display module 160 from a first edge point of the display module 160 corresponding to the position where the brief information 1293 of the application is displayed to a second edge point of the display module 160 where the third object is located.

A method for operating an electronic device 101 according to an embodiment of the disclosure may include detecting, on an execution screen of an application displayed on a display of the electronic device, a user input to interrupt display of the execution screen of the application, displaying information associated with the application on the display 160 in response to the user input, and displaying a color corresponding to the application at a position where the information associated with the application is displayed and on a handle-type UI.

The operation of displaying may include an operation of sequentially displaying a color corresponding to the application at a position where the information associated with the application is displayed and on the handle-type UI.

The operation of sequentially displaying may include an operation of displaying an edge lighting effect along an edge path of the display from a position where the information associated with the application is displayed to a position where the handle-type UI is displayed.

The operation of displaying an edge lighting effect may include an operation of calculating a shortest path from the position where the information associated with the application is displayed to the position where the handle-type UI is displayed through the edge area of the display, and an operation of displaying the edge lighting effect on the edge of the display, based on the calculated shortest path, from a first edge point of the display corresponding to the position where the information associated with the application is displayed to a second edge point of the display corresponding to the handle-type UI.

The method may further include an operation of performing control such that an edge lighting effect is displayed while rotating along the edge of the display or such that the edge lighting effect is displayed to blink, based on the current state of the application, while the color corresponding to the application is displayed on the handle-type UI.

The method may further include an operation of executing a second application, based on a user input, while a first color of the application is displayed on the handle-type UI, an operation of detecting a user input to interrupt display of an execution screen of the second application, an operation of displaying information associated with the second application on the display in response to the user input, and an operation of displaying a second edge lighting effect on the edge of the display from a first edge point of the display corresponding to the position where the information associated with the second application is displayed to a second edge point of the display corresponding to the handle-type UI.

The method may further include an operation of displaying the second edge lighting effect to the second edge point of the display corresponding to the handle-type UI, and then displaying a color corresponding to the second application on the handle-type UI.

A first color displayed as the edge lighting effect and a second color displayed as the second edge lighting effect may be configured to be different from each other.

The operation of displaying the color on the handle-type UI may include an operation of displaying both the first color and the second color on the handle-type UI, or displaying them alternately thereon.

A computer-readable recording medium may include a program recorded to execute a method for operating an electronic device 101 on a processor, wherein the program may be configured to execute an operation of detecting, on an execution screen of an application displayed on a display of the electronic device, a user input to interrupt display of the execution screen of the application, an operation of displaying information associated with the application on the display 160 in response to the user input, and an operation of displaying a color corresponding to the application at a position where the information associated with the application is displayed and on a handle-type UI.

The various embodiments of the disclosure disclosed in this specification and drawings are merely presented as specific examples to easily explain the technical idea of the disclosure and help in understanding the disclosure, and are not intended to limit the scope of the disclosure. Therefore, the scope of the disclosure should be interpreted to encompass all changes or modifications derived from the technical idea of the disclosure, as well as the embodiments disclosed herein.

## Claims

1. An electronic device (101) comprising:
a display (160);
a memory (130); and
a processor (120),
wherein instructions stored in the memory are configured to cause, when executed by the processor, the electronic device to:
detect, on an execution screen of an application displayed on the display, a user input to interrupt display of the execution screen of the application;
display information associated with the application on the display in response to the user input; and
display a color corresponding to the application at a position where the information associated with the application is displayed and on a handle-type user interface (UI).

2. The electronic device of claim 1,
wherein the handle-type UI is a UI displayed adjacent to a left edge area or right edge area of the display, and
wherein the instructions are configured to cause, when executed by the processor, the electronic device to
display, in a case where a user input for selecting the handle-type UI and then dragging it toward the center of the display is detected, a hidden edge panel and display a list of frequently used applications on the edge panel.

3. The electronic device of claim 1,
wherein the instructions are configured to cause, when executed by the processor, the electronic device to
sequentially display a color corresponding to the application at a position where the information associated with the application is displayed and on the handle-type UI.

4. The electronic device of claim 1, wherein, in the operation of sequentially displaying,
an edge lighting effect is displayed along an edge path of the display from a position where the information associated with the application is displayed to a position where the handle-type UI is displayed.

5. The electronic device of claim 4,
wherein the instructions are configured to cause, when executed by the processor, the electronic device to:
calculate a shortest path from the position where the information associated with the application is displayed to the position where the handle-type UI is displayed through the edge area of the display; and
display the edge lighting effect on the edge of the display, based on the calculated shortest path.

6. The electronic device of claim 5,
wherein the instructions are configured to cause, when executed by the processor, the electronic device to
display the edge lighting effect on the edge of the display from a first edge point of the display corresponding to the position where the information associated with the application is displayed to a second edge point of the display corresponding to the handle-type UI.

7. The electronic device of claim 1, wherein the instructions are configured to cause, when executed by the processor, the electronic device to
perform control such that an edge lighting effect is displayed while rotating along the edge of the display or such that the edge lighting effect is displayed to blink, based on a current state of the application, while the color corresponding to the application is displayed on the handle-type UI.

8. The electronic device of claim 1, wherein the instructions are configured to cause, when executed by the processor, the electronic device to:
execute a second application, based on a user input, while a first color of the application is displayed on the handle-type UI;
detect a user input to interrupt display of an execution screen of the second application;
display information associated with the second application on the display in response to the user input; and
display a second edge lighting effect on the edge of the display from a first edge point of the display corresponding to the position where the information associated with the second application is displayed to a second edge point of the display corresponding to the handle-type UI.

9. The electronic device of claim 8, wherein the instructions are configured to cause, when executed by the processor, the electronic device to
display the second edge lighting effect to the second edge point of the display corresponding to the handle-type UI, and then display a color corresponding to the second application on the handle-type UI.

10. The electronic device of claim 9,
wherein the first color displayed as the edge lighting effect and a second color displayed as the second edge lighting effect are configured to be different from each other.

11. The electronic device of claim 9, wherein the instructions are configured to cause, when executed by the processor, the electronic device to:
display the first color and the second color on the handle-type UI;
display both the first color and the second color on the handle-type UI; or
display them alternately thereon.

12. The electronic device of claim 1, wherein the instructions are configured to cause, when executed by the processor, the electronic device to
change the position where the information associated with the application is displayed, based on a user input of dragging and dropping the information associated with the application.

13. The electronic device of claim 1, wherein the instructions are configured to cause, when executed by the processor, the electronic device to
control, while the color corresponding to the application is displayed on the handle-type UI, the color displayed on the handle-type UI, based on a current state of the application.

14. A method for operating an electronic device (101), the method comprising:
detecting, on an execution screen of an application displayed on a display of the electronic device, a user input to interrupt display of the execution screen of the application;
displaying information associated with the application on the display (160) in response to the user input; and
displaying a color corresponding to the application at a position where the information associated with the application is displayed and on a handle-type UI.

15. A computer-readable recording medium comprising a program recorded to execute a method for operating an electronic device (101) on a processor, wherein the program is configured to execute:
an operation of detecting, on an execution screen of an application displayed on a display of the electronic device, a user input to interrupt display of the execution screen of the application;
an operation of displaying information associated with the application on the display (160) in response to the user input; and
an operation of displaying a color corresponding to the application at a position where the information associated with the application is displayed and on a handle-type UI.
